# EUROPEAN PATENT APPLICATION

(11) **EP 4 667 712 A1**
(43) Date of publication of application: **24.12.2025**
(21) Application number: 25180769.9
(22) Date of filing: 04.06.2025
(51) Int. Cl.: F01D 25/32, F01D 25/24

(54) **PROTECTION SHIELD FOR A DRAIN**

(30) Priority: 04.06.2024 US 202418733582
(71) Applicant: PRATT & WHITNEY CANADA CORP., Longueuil, Québec J4G 1A1 (CA)
(72) Inventor: NAGARAJ, Raghunath, (01BE5) Longueuil, J4G 1A1 (CA); ALBUS, Jesse, (01BE5) Longueuil, J4G 1A1 (CA)
(74) Representative: Dehns

(57) **Abstract**

A drain shield (10) can include a body (12), a stop (14), and a plastically deformable portion (16). The body (12) includes a passage (18) extending through the body (12) and along an axis (A). The stop (14) extends outward from a first end (12A) of the body (12) relative to the axis (A). The plastically deformable portion (16) is at a second end (12B) opposite the first end (12A). A casing module (28) can include a wall (22) separating a high-pressure region (24) from a low-pressure region (26) fluidly connected by an aperture (20) extending through the wall (22). The drain shield (10) is insertable through the aperture (20) and deformable to enclose the aperture (20).

## Description

### BACKGROUND

The present disclosure relates to drainage apertures of casing assemblies, and more particularly, to improving corrosion, erosion, and wear resistance of drainage apertures.

Many machines, engines, motors, pumps, and other mechanical devices (collectively "work-producing devices") may ingest dirt, sand, and/or other debris during operation. To prevent buildup of debris within work-producing devices, the device casing can include an aperture fluidly connecting a high-pressure region to a low-pressure region. Fluid within the high-pressure region has a higher static pressure relative to a lower static pressure within the low-pressure region, driving a drainage flow from the high-pressure region to the low-pressure region via the aperture. Debris entrained within the fluid erodes, corrodes, and/or wears the aperture, particularly at an interface between the aperture and a high-pressure side of a casing wall. The erosion, corrosion, and/or wear of the aperture leads to increased drainage flow between the high-pressure region and the low-pressure region, which may negatively impact the efficiency and/or operation of the work-producing device.

### SUMMARY

A drain shield according to an example embodiment of this disclosure can include a body, a stop, and a plastically deformable portion. The body has a passage extending through the body and along an axis. The stop extends outward from the body relative to the axis at a first end of the body. The plastically deformable portion is at a second end of the body opposite the first end.

A casing module according to an example embodiment of this disclosure can include a wall, an aperture, and the drain shield. The wall separates a high-pressure region and a low-pressure region in which static pressure within the high-pressure region is greater than static pressure within the low-pressure region. The aperture extends through the wall and is configured to permit fluid from the high-pressure region to flow through the aperture into the low-pressure region. The drain shield is insertable into the aperture such that the passage fluidly connects the high-pressure region to the low-pressure region. The stop mates with a first surface of the wall and the plastically deformable portion mates with a second surface of the wall opposite the first surface.

A method for installing the drain shield into the aperture can include inserting the drain shield through the aperture in an uninstalled state such that the stop mates with the first surface of the wall. The method further includes deforming the plastically deformable portion to conform to the second surface of the wall opposite the first surface.

### BRIEF DESCRIPTION OF THE DRAWINGS

FIG. 1A is an example drain shield depicted in an uninstalled state.
FIG. 1B is the drain shield from FIG. 1A depicted in an installed state.
FIG. 2A, FIG. 2B, and FIG. 2C depict an example sequence for installing drain shield within an aperture.
FIG. 3 is a flow chart describing a method for installing the drain shield into the aperture.

### DETAILED DESCRIPTION

As disclosed herein, drain shield 10 is installable within an aperture for erosion protection, corrosion protection, and/or general wear protection. Drain shield 10 can be installed in a newly manufactured aperture in which the aperture can include inlet geometry to accommodate drain shield 10. In other instances, drain shield 10 can be installed within a damaged aperture to restore as-manufactured aperture geometry as well as protect the aperture from erosion, corrosion, and/or wear.

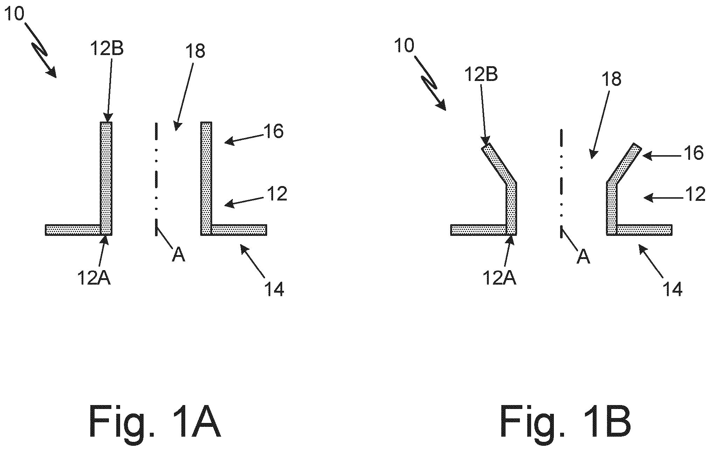

FIG. 1A depicts an example of drain shield 10 in an uninstalled state, and FIG. 1B depicts drain shield 10 in an installed state, each depicted without an aperture for illustrative purposes. Drain shield 10 is manufactured in the uninstalled state to enable insertion into an aperture of a wall, or any other member separating a high-pressure region from a low-pressure region. After installation into the aperture, drain shield 10 is deformed to the installed state to conform drain shield 10 to features of the aperture. In the installed state, drain shield 10 is retained within aperture and with respect to the wall via opposing surfaces of drain shield 10, the aperture, and/or the wall. While installed, drain shield 10 encloses aperture and/or a portion of the wall and thereby provides a wearable and/or sacrificial layer for erosion, corrosion, and other wear.

Drain shield 10 includes body 12, stop 14, and plastically deformable portion 16. Body 12 is a portion of drain shield 10 that includes a shape complimentary to a shape of the aperture. An outer peripheral surface of body 12 can be cylindrical, columnar, frustoconical, cuboid, prismatic, or any other shape that is complimentary to a shape of the aperture. A longitudinal length of body 12 is commensurate with or greater than a length of the aperture and is defined by a linear length extending from and normal to first end 12A to second end 12B, which is configured to coincide with a high-pressure surface (i.e., a second surface) of the wall.

Body 12 includes passage 18 that extends longitudinally through body 12 from first end 12A to second end 12B. Passage 18 is bound by interior peripheral surface 12C of body 12 and can be cylindrical, columnar, frustoconical, cuboid, prismatic, or any other shape suitable for drainage flow. Axis A is an imaginary reference line that extends through the geometric center of passage 18. In certain examples, passage 18 and body 12 are concentric such that passage 18 extends through a geometric center of body 12. In other examples, passage 18 can be offset with respect to the geometric center of body 12 such that axis A does not coincide with a geometric center of body 12.

Stop 14 extends outward from first end 12A of body 12 relative to axis A to longitudinally restrain drain shield 10 when installed within the aperture. In some examples, stop 14 is normal to axis A and/or concentric to axis A. In other examples, stop 14 may form an oblique angle with axis A to accommodate apertures with non-normal orientations to respective walls.

Body 12, stop 14 and plastically deformable portion 16 of drain shield 10 are constructed from a material that is galvanically compatible with a material of the parent wall (e.g., wall 22 discussed below). Galvanically compatible materials do not promote galvanic corrosion when placed in contact with a dielectric. Further, drain shield 10 can be constructed from a material with greater hardness than the hardness of the parent wall. Drain shield 10 constructed from a relatively harder and galvanically compatible material improves corrosion resistance as well as erosion and wear resistance relative to the parent wall.

As shown in FIG. 1A and FIG. 1B, stop 14 is a flange that extends outward from first end 12A of body 12 relative to axis A. In other examples, stop 14 can take the form of one or more tabs extending outward from first end 12A of body 12, among other possible geometries.

Plastically deformable portion 16 is a section of body 12 coinciding with second end 12B that can be permanently deformed to conform to a shape of the aperture. In the uninstalled state shown by FIG. 1A, plastically deformable portion 16 extends along axis A parallel to an adjacent section of body 12 coinciding with first end 12A. In the installed state shown by FIG. 1B, plastically deformable portion 16 extends at an angle with respect to the adjacent section of body 12. In the depicted example, deformable portion forms an oblique angle with axis A of approximately forty-five degrees. In other examples, plastically deformable portion 16 can be any other angle with respect to axis and/or adjacent section of body 12 suitable to restrain drain shield 10 within the aperture and that conforms drain shield 10 to the aperture. As shown by FIG. 1A and FIG. 1B, plastically deformable portion 16 has a cylindrical shape in the uninstalled state and a frustoconical shape in the installed state.

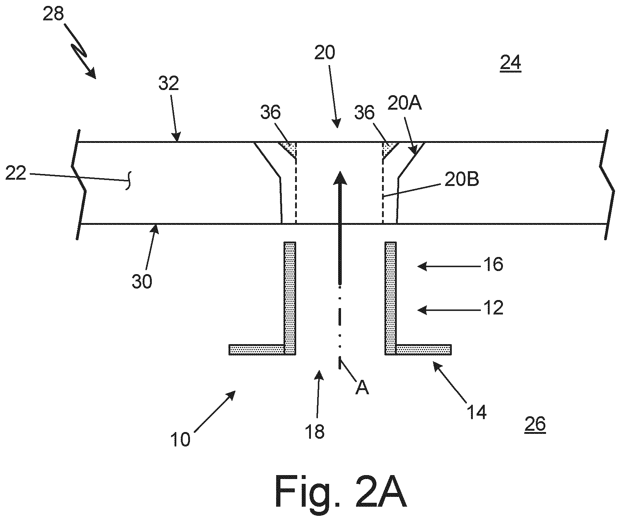

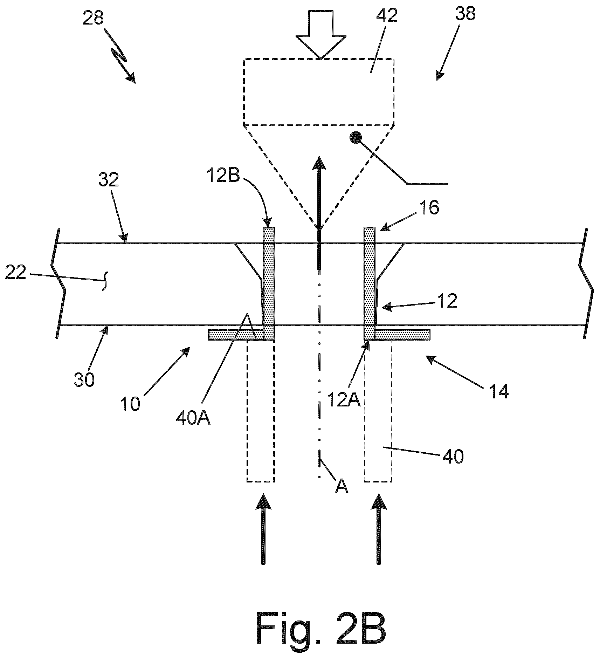

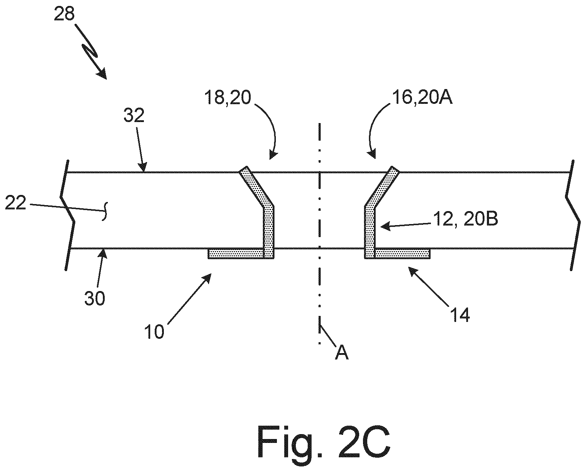

FIG. 2A, FIG. 2B, and FIG. 2C depict an example sequence for installing drain shield 10 within aperture 20. FIG. 2A depicts an uninstalled state of drain shield 10 prior to insertion into aperture 20. FIG. 2B depicts example tooling used to deform drain shield 10 post insertion. FIG. 2C depicts drain shield 10 in an installed state and conforming to aperture 20.

As best viewed in FIG. 2A, wall 22 is any member that forms a portion of a work-producing device that separates high-pressure region 24 and low-pressure region 26. For example, wall 22 can form a portion of casing module 28 found in a gas turbine engine. However, wall 22 may form a portion of a casing of any other type of device that produces high-pressure region 24 and low-pressure region 26.

Wall 22 includes low-pressure surface 30 (i.e., a first surface) delimiting low-pressure region 26 and high-pressure surface 32 (i.e., a second surface) delimiting high-pressure region 24. Low-pressure surface 30 and high-pressure surface 32 can be parallel and spaced to define a thickness of wall. In other examples, low-pressure surface 30 and/or low-pressure surface 32 can converge, diverge, and/or be contoured to form a variable thickness wall.

In operation of work-producing device, fluid within high-pressure region 24 has a static pressure that is greater than a static pressure of fluid within low-pressure region 26. The pressure differential between high-pressure region 24 and low-pressure region 26 is sufficient to allow fluid from within high-pressure region 24 to exit into low-pressure region via aperture 20, or multiple apertures 20.

Aperture 20 can have any suitable cross-sectional shape and orientation with respect to wall 22. The cross-sectional shape of aperture 20 describes a shape of aperture 20 in a cross-sectional plane normal to axis A. Example cross-sectional shapes include, but are not limited to, circular, square, rectangular, ovular, elliptical, and/or another polygonal shape. As depicted in FIG. 2A, FIG. 2B, and FIG. 2C, aperture 20 has a circular cross-section to form a bore extending through wall 22. The orientation of aperture 20 describes an aperture angle in three-dimensional space between axis A and low-pressure surface 30, or alternatively, with respect to low-pressure surface 32. Aperture 20 can be normal to low-pressure surface 30 and/or low-pressure surface 32 such as shown in FIG. 2A, 2B, and 2C. In other examples, aperture 20 can form an oblique angle with respect to low-pressure surface 30 and/or high-pressure surface as viewed in the figures (i.e., an in-plane angle) and/or as viewed within another plane relative to the figure view (i.e., an out-of-plane angle).

Aperture 20 can include inlet geometry to engage drain shield 10 in the installed state. Inlet geometry can include a chamfer, a radius, and/or other contoured profile at an intersection between aperture 20 and high-pressure surface 32. As depicted in FIG. 2A, inlet geometry includes chamfer 20A. Chamfer 20A can form any suitable angle with respect to low-pressure surface 32. In some examples, chamfer 20A forms a forty-five-degree angle with respect to high-pressure surface 32. In other examples, the chamfer angle can be more or less than forty-five degrees, for example, thirty degrees or sixty degrees. In each instance, the length of chamfer 20A along axis A does not exceed one third of the wall thickness.

In certain instances, aperture 20 can be newly manufactured to accommodate drain shield 10. Aperture 20 is bound by wall surface 20B, which has a size and shape to accommodate outer peripheral surface 12A of drain shield 10. In some examples, wall surface 20B and outer peripheral surface 12A are spaced to define a gap therebetween after insertion of drain shield 10. In other examples, wall surface 20B and outer peripheral surface 12A may define location fit and/or an interference fit. In either configuration, differential thermal growth of drain shield 10 relative to wall 22 may cause outer peripheral surface 12A of drain shield 10 to contact wall surface 20B. In other examples, differential thermal growth of drain shield 10 relative to wall 22 may cause outer peripheral surface 12A to separate from wall surface 20B, or for the gap to increase.

In other instances, aperture 20 can be damaged such that erosion, corrosion, and/or wear has removed material of wall 22 at an interface between aperture 20 and high-pressure surface 32 (i.e., the second surface), or less commonly between aperture 20 and low-pressure surface 30. For instance, aperture 20 can have an as-manufactured dimension indicated in FIG. 2A by dashed lines 34. During operation, damage can occur within damage zone 36, which circumscribes aperture at an intersection of aperture 20 and low-pressure surface 32. While damage zone 36 is shown as a particular region in FIG. 2A, damage zone 36 can be smaller or larger, in other examples, or may circumscribe aperture 20 at an intersection of aperture 20 and low-pressure surface 30. Moreover, damage within damage zone 36 can be nonuniform, creating more damage at certain locations within damage zone 36 relative to other locations within damage zone 36 depending on drainage flow. Additionally, damage may not be present throughout damage zone 36, depending on operating conditions of the work-producing device. Repair of aperture 20 can include removing damage zone through a subtractive manufacturing process (e.g., milling, turning, drilling, and electron discharge machining, among other possible processes) prior to insertion of drain shield 10 as represented by the space between dashed lines 34 and wall surface 20B of aperture 20. In either situation, drain shield 10 is insertable into aperture 20 along a direction parallel to axis A as depicted in FIG. 2A.

FIG. 2B depicts drain shield 10 after insertion and before deformation. As depicted, stop 14 of drain shield 10 abuts low-pressure surface 30 (i.e., the first surface of wall 22), and body 12 of drain shield 10 extends through aperture 20 such that plastically deformable portion 16 is at or protrudes beyond high-pressure surface 32 (i.e., the second surface of wall 22). Tool 38 ca be used to deform plastically deformable portion 16 of drain shield 10.

Tool 38 includes support 40 and mandrel 42. Support 40 and mandrel 42 can be physically separate components or can be interconnected in any suitable manner permitted by casing module 28. Support 40 includes mating surface 40A that is configured to engage stop 14 of drain shield 10. Once engaged, support 40 retains drain shield 10 within aperture 20 prior to and during deformation of drain shield 10. Support 40 can be any suitable shape permitted by geometry of wall 22, aperture 20, and drain shield 10. For example, support 40 can be solid cylinder. In other examples, support 40 can include bore 40B extending at least partially into support 40 from mating surface 40A to accommodate mandrel 42 during the deformation process. Mandrel 42 engages plastically deformable portion 16 at second end 12B of drain shield 10. The tip of mandrel 42 has a shape corresponding to a desired shape of plastically deformable portion 16 in the installed state. For example, the tip of mandrel 42 can have a conical shape as shown in FIG. 2B, or a frustoconical shape conforming to a desired deformed geometry of drain shield 10. In other examples, mandrel 42 can include a concave contour conforming to a desired radius of drain shield 10.

Applying opposing force to mandrel 42 and support 40 along axis A draws mandrel 42 into engagement with plastically deformable portion 16 of drain shield 10 in the uninstalled condition. Continued application of force to mandrel 42 and support 40 permanently deforms plastically deformable portion 16 of drain shield 10 until plastically deformable portion 16 engages aperture 20 (e.g., chamfer 20A) and/or wall 22. Mandrel 42 and support 40 are removed after deformation of drain shield 10.

FIG. 2C depicts drain shield 10 in the installed state. Plastically deformable portion 16 of drain shield 10 is permanently deformed to conform with aperture 20 and/or low-pressure surface 32 of wall 22. As depicted, plastically deformable portion 16 is frustoconical and conforms to a chamfer 20A of aperture 20. However, in other examples, plastically deformable portion 16 may conform to a geometry of low-pressure surface 32 (i.e., the second surface of wall 22) and/or a geometry of aperture 20, which can include chamfer 20A and/or a radius, or other contours.

In the installed state, drain shield 10 is retained within aperture 20 by respective mating surfaces of drain shield 10, aperture 20, and/or wall 22. Stop 14 engages low-pressure surface 30 (i.e., a first surface of wall 22) to prevent displacement of drain shield 10 along axis A towards wall 22. Plastically deformable portion 16 engages inlet geometry of aperture 20 (e.g., chamfer 20A, radius, or other contour of inlet geometry) and/or high-pressure surface (i.e., a second surface of wall 22) to prevent displacement of drain shield 10 along axis towards wall 22 (i.e., in an opposite direction to stop 14). Outer peripheral surface 12A of body 12 restrains drain shield 10 radially with respect to axis A.

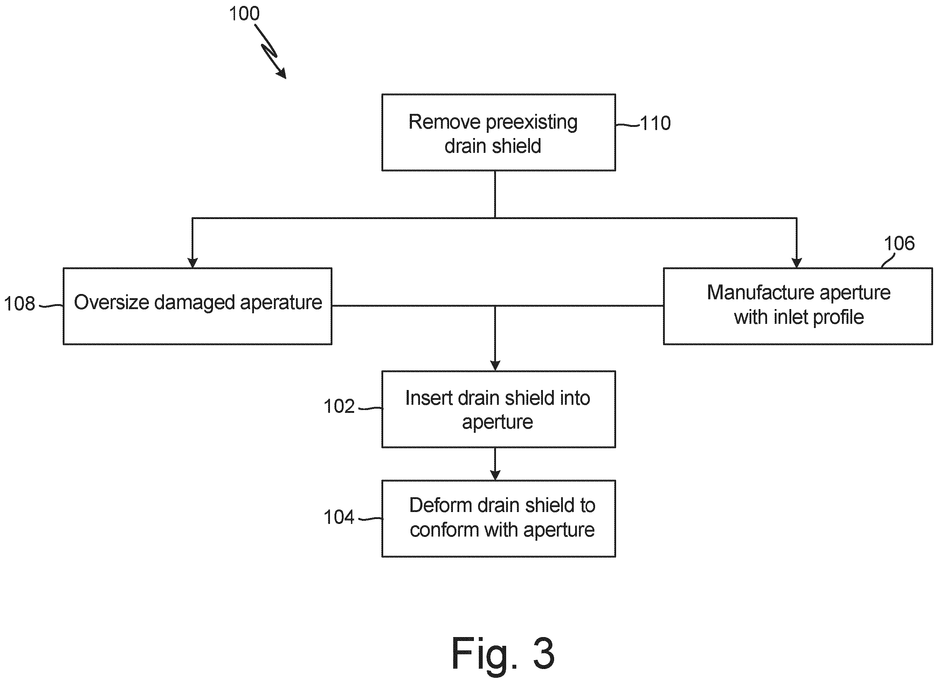

FIG. 3 is a flow chart describing a method for installing drain shield 10 within an aperture 20, which can be a newly manufactured aperture or a damaged aperture. Method 100 includes steps 102 and 104. Method 100 can include step 106 for preparing newly manufactured apertures for drain shield 10. Other examples of method 100 include step 108 for preparing damaged apertures for drain shield 10. Apertures 20 with preexisting drain shields 10 can further include step 110. The sequence depicted is for illustrative purposes only and is not meant to limit the method 100 in any way as it is understood that the portions of the method can proceed in a different logical order, additional or intervening portions can be included, or described portions of the method can be divided into multiple portions, or described portions of the method can be omitted without detracting from the described above.

In step 102, drain shield 10 is inserted into aperture 20 in a direction parallel to axis A. Where outer peripheral surface 12A of drain shield 10 is configured to form a gap with wall surface 20B in the installed state, drain shield 10 can be inserted by hand. Examples of drain shield that include a location or interference fit between outer peripheral surface 12A and wall surface 20B can be inserted using an insertion tool or a press, among other potential options.

In step 104, drain shield 10 is deformed to conform with aperture 20 and/or wall 22. Deforming drain shield 10 can include restraining stop 14 of drain shield 10 against low-pressure surface (e.g., a first surface) of wall 22 with support 40 of tool 38. In such examples, a centerline of support 40 can be aligned with axis A of drain shield 10. Step 104 can further include deforming plastically deformable portion 16 with mandrel 42. Force applied by mandrel 42 and support 40 act along axis A in opposing directions until engagement with aperture 20 and/or wall 22.

Newly manufactured apertures 20 can be prepared for drain shield 10 in step 106 prior to step 102. In some examples, step 106 includes selecting a size (e.g., a diameter) of aperture 20 that is larger body 12 to accommodate drain shield 10. Further, preparation of aperture 20 in step 106 can include forming a chamfer, a radius, and/or a contour at an interface of aperture 20 with low-pressure surface 32 (i.e., the second surface of wall 22).

Preparation of damaged apertures 20 can include performing step 108 prior to step 102. In some examples of step 108, a size (e.g., a diameter) of aperture 20 is enlarged to remove damage zone 36 and to accommodate drain shield 10.

Apertures 20 with preexisting drain shields 10 may be prepared for replacement from time to time in step 110 prior to step 102. Preexisting drain shields 10 can experience corrosion, erosion, and/or wear during operation of the work-producing device. Accordingly, it may be beneficial to replace preexisting drain shields 10 with a new drain shield 10 of the same design, or an improved design. During step 110, a preexisting drain shield can be removed from wall 22 via a subtractive manufacturing process (e.g., milling, turning, drilling, electron discharge machining, among other possible processes).

Steps 102, 104, and one or more of steps 106, 108, and 110 can be repeated for each drain shield 10 and aperture 20 combination of casing module 28. At least some of drain shields 10 and corresponding apertures 20 can have different geometry than other drain shields 10 and apertures 20 of casing module 28.

In this way, one or more apertures 20 of casing module 28 are protected from erosion, corrosion, and/or wear due to entrained debris and/or other particulate within fluid exiting high-pressure region 24 into low-pressure region 26 of casing module 28.

### Discussion of Possible Embodiments

The following are non-exclusive descriptions of possible embodiments of the present invention.

### Drain Shield

A drain shield according to an example embodiment of this disclosure includes, among other things, a body, a stop, and a plastically deformable portion. The body has a passage extending through the body and along an axis. The stop extends outward from the body relative to the axis at a first end of the body. The plastically deformable portion is at a second end of the body opposite the first end.

The drain shield of the preceding paragraph can optionally include any one or more of the following features, configurations and/or additional components.

A further embodiment of the foregoing drain shield, wherein the body and the passage can define an annular cross-section.

A further embodiment of any of the foregoing drain shields, wherein the plastically deformable portion can have an uninstalled state in which the plastically deformable portion extends parallel to the axis.

A further embodiment of any of the foregoing drain shields, wherein the plastically deformable portion can have an installed state in which the plastically deformable portion extends outward from the axis at an oblique angle to the axis.

A further embodiment of any of the foregoing drain shields, wherein the plastically deformable portion can be cylindrical in the uninstalled state and frustoconical in the installed state.

A further embodiment of any of the foregoing drain shields, wherein the plastically deformable portion can be less than or equal to one third the length of the body measured from the first end to the second end parallel to the axis.

A further embodiment of any of the foregoing drain shields, wherein the stop can be a flange that is normal to the axis.

A further embodiment of any of the foregoing drain shields, wherein lateral extent of the stop can be less than or equal to one third the length of the body measured from the first end to the second end parallel to the axis.

A further embodiment of any of the foregoing drain shields, wherein the lateral extend can be measured along a radial direction relative to the axis.

### Casing Module

A casing module according to an example embodiment of this disclosure includes, among other things, a wall, an aperture, and a drain shield. The wall separates a high-pressure region and a low-pressure region of the casing module. Static pressure within the high-pressure region is greater than static pressure within the low-pressure region. The aperture extends through the wall and is configured to permit fluid from the high-pressure region to flow through the aperture into the low-pressure region. The drain shield includes a body, a stop, and a plastically deformable portion. The body includes a passage extending through the body along an axis to fluidly connect the high-pressure region and the low-pressure region. The stop extends outward from a first end of the body relative to the axis. The plastically deformable portion is at a second end of the body opposite the first end. The stop mates with a first surface of the wall, and the plastically deformable portion mates with a second surface of the wall opposite the first surface.

The casing module of the preceding paragraph can optionally include any one or more of the following features, configurations and/or additional components.

A further embodiment of the foregoing casing module, wherein the aperture can include a chamfer at an interface between the second surface of the wall and the second end of the body.

A further embodiment of any of the foregoing casing modules, wherein the plastically deformable portion can conform to and encloses the chamfer.

A further embodiment of any of the foregoing casing modules, wherein the stop can be a flange that is normal to the axis.

A further embodiment of any of the foregoing casing modules, wherein the plastically deformable portion can have an uninstalled state in which the plastically deformable portion extends parallel to the axis.

A further embodiment of any of the foregoing casing modules, wherein the plastically deformable portion can be insertable through the aperture in the uninstalled state.

A further embodiment of any of the foregoing casing modules, wherein the plastically deformable portion can have an installed state in which the plastically deformable portion extends outward from the axis at an oblique angle to the axis that restrains the drain shield with respect to the aperture.

A further embodiment of any of the foregoing casing modules, wherein the plastically deformable portion can be less than or equal to one third the length of the body measured from the first end to the second end parallel to the axis.

A further embodiment of any of the foregoing casing modules, wherein the body and the passage can define an annular cross-section.

### A method for protecting an aperture

A method according to an example embodiment of this disclosure includes, among other things, inserting a drain shield through an aperture extending through a wall and deforming the plastically deformable portion to conform to a second surface of the wall opposite the first surface. The drain shield includes a body, a stop, and a plastically deformable portion. The body has a passage extending through the body and along an axis. The stop extends outward from the body relative to the axis at a first end of the body. The plastically deformable portion is at a second end of the body opposite the first end.

The method of the preceding paragraph can optionally include any one or more of the following features, configurations and/or additional components.

A further embodiment of the foregoing methods, wherein deforming the plastically deformable portion can include restraining, using a support part of a tool, the stop against the first surface of the wall.

A further embodiment of any of the foregoing methods, wherein deforming the plastically deformable portion can include deforming, using a mandrel of the tool, the plastically deformable potion.

A further embodiment of any of the foregoing methods, wherein force applied by the support part on to the drain shield opposes a force of the mandrel.

A further embodiment of any of the foregoing methods can include enlarging a diameter of the aperture to remove a damaged region of the aperture at the second surface of the wall before inserting the drain shield through the aperture and deforming the plastically deformable portion.

A further embodiment of any of the foregoing methods can include forming a chamfer at an interface between the aperture and the second surface of the wall before inserting the drain shield through the aperture and deforming the plastically deformable portion.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A drain shield (10) comprising:
a body (12) having a passage (18) extending through the body (12) and along an axis (A);
a stop (14) extending outward from the axis (A) at a first end (12A) of the body (12); and
a plastically deformable portion (16) at a second end (12B) of the body (12) opposite the first end (12A).

2. The drain shield (10) of claim 1, wherein the body (12) and the passage (18) define an annular cross-section.

3. The drain shield (10) of claim 1 or 2, wherein the plastically deformable portion (16) has an uninstalled state in which the plastically deformable portion (16) extends parallel to the axis (A) and an installed state in which the plastically deformable portion (16) extends outward from the axis (A) at an oblique angle to the axis (A).

4. The drain shield (10) of claim 3, wherein the plastically deformable portion (16) is cylindrical in the uninstalled state and frustoconical in the installed state.

5. The drain shield (10) of any preceding claim, wherein the plastically deformable portion (16) is less than or equal to one third the length of the body (12) measured from the first end (12A) to the second end (12B) parallel to the axis (A).

6. The drain shield (10) of any preceding claim, wherein the stop (14) is a flange that is normal to the axis (A).

7. The drain shield (10) of claim 6, wherein lateral extent of the stop (14) is less than or equal to one third the length of the body (12) measured from the first end (12A) to the second end (12B) parallel to the axis (A), and wherein the lateral extent is measured along a radial direction relative to the axis (A).

8. A casing assembly comprising:
a wall (22) separating a high-pressure region (24) and a low-pressure region (26) of the casing assembly, wherein a static pressure within the high-pressure region (24) is greater than a static pressure within the low-pressure region (26);
an aperture (20) extending through the wall (22) configured to permit fluid from the high-pressure region (24) to flow through the aperture (20) into the low-pressure region (26); and
the drain shield (10) of any preceding claim extending through and enclosing the
aperture (20),
the body (12) having the passage (18) extending through the body (12) along the axis (A) to fluidly connect the high-pressure region (24) and the low-pressure region (26);
wherein the stop (14) mates with a first surface (30) of the wall (22) and the plastically deformable portion (16) mates with a second surface (32) of the wall (22) opposite the first surface (30).

9. The case assembly of claim 8, wherein the aperture (20) includes a chamfer (20A) at an interface between the second surface (32) of the wall (22) and the second end (12B) of the body (12), and wherein the plastically deformable portion (16) conforms to and encloses the chamfer (20A).

10. The case assembly of claim 8 or 9, wherein the plastically deformable portion (16) has an uninstalled state in which the plastically deformable portion (16) extends parallel to the axis (A) that is insertable through the aperture (20) and an installed state in which the plastically deformable portion (16) extends outward from the axis (A) at an oblique angle to the axis (A) that restrains the drain shield (10) with respect to the aperture (20).

11. A method for protecting an aperture (20), the method comprising:
inserting a drain shield (10) through an aperture (20) extending through a wall (22), wherein the drain shield (10) comprises:
a body (12) having a passage (18) extending along an axis (A) through the body (12);
a stop (14) extending outward from the axis (A) at a first end (12A) of the body (12) and mating with a first surface of the wall (22); and
a plastically deformable portion (16) at a second end (12B) of the body (12) opposite the first end (12A); and
deforming the plastically deformable portion (16) to conform to a second surface (32) of the wall (22) opposite the first surface (30).

12. The method of claim 11, wherein deforming the plastically deformable portion (16) includes:
restraining, using a support part (40) of a tool (38), the stop (14) against the first surface (30) of the wall (22); and
deforming, using a mandrel (42) of the tool (38), the plastically deformable portion (16), wherein force applied by the support part (40) on to the drain shield (10) opposes a force of the mandrel (42).

13. The method of claim 12, further comprising:
enlarging a diameter of the aperture (20) to remove a damaged region of the aperture (20) at the second surface (32) of the wall (22) before inserting the drain shield (10) through the aperture (20) and deforming the plastically deformable portion (16).

14. The method of claim 12 or 13, further comprising:
forming a chamfer (20A) at an interface between the aperture (20) and the second surface (32) of the wall (22) before inserting the drain shield (10) through the aperture (20) and deforming the plastically deformable portion (16).
